# FASCICULE DE BREVET EUROPEEN

(11) **EP 2 497 254 B1**
(45) Date de publication et mention de la délivrance du brevet: **15.04.2020**
(21) Numéro de dépôt: 10798164.9
(22) Date de dépôt: 04.11.2010
(51) Int. Cl.: H04L 29/12, H04L 29/06

(54) **PROCEDE DE SELECTION D'UN EQUIPEMENT D'UN RESEAU DE TELECOMMUNICATIONS**
VERFAHREN ZUR AUSWAHL EINES GERÄTS IN EINEM TELEKOMMUNIKATIONSNETZ
METHOD FOR SELECTING A DEVICE IN A TELECOMMUNICATIONS NETWORK

(30) Priorité: 05.11.2009 FR 0957848
(43) Date de publication de la demande: 12.09.2012
(73) Titulaire: Orange, 75015 Paris (FR)
(72) Inventeur: MOUQUET, Antoine, F-92400 Courbevoie (FR); BARANKANIRA, Delphin, F-92160 Antony (FR)
(74) Mandataire: Plasseraud IP
(86) Numéro de dépôt international: PCT/FR2010/052367
(87) Numéro de publication internationale: WO 2011/055082

(56) Documents cités:
- EP-A1- 1 973 295
- "3rd Generation Partnership Project; Technical Specification Group Services and System Aspects; Feasibility Study on IMS Evolution; (Release 9)", 3GPP STANDARD; 3GPP TR 23.812, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.5.1, 1 avril 2009 (2009-04-01), pages 1-26, XP050361585,
- GULBRANDSEN TROLL TECHNOLOGIES P VIXIE INTERNET SOFTWARE CONSORTIUM L ESIBOV MICROSOFT CORP A: "A DNS RR for specifying the location of services (DNS SRV); rfc2782.txt", IETF STANDARD, INTERNET ENGINEERING TASK FORCE, IETF, CH, 1 février 2000 (2000-02-01), XP015008565, ISSN: 0000-0003 cité dans la demande
- "3rd Generation Partnership Project; Technical Specification Group Core Network and Terminals; IP Multimedia (IM) Subsystem Cx and Dx interfaces; Signalling flows and message contents (Release 8)", 3GPP STANDARD; 3GPP TS 29.228, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.6.0, 1 septembre 2009 (2009-09-01), pages 1-65, XP050372488,

## Description

La présente invention concerne le domaine des télécommunications.

Plus particulièrement, elle vise la sélection d'équipements pour leur mise en œuvre dans la réalisation d'une communication sur un réseau de télécommunications.

Dans le cadre du projet 3GPP (« Third Generation Partnership Project »), il a été proposé une nouvelle architecture de réseau de télécommunications dite IMS (« IP Multimédia Subsystem »).

Cette nouvelle architecture permet aux opérateurs de ce type de réseaux d'offrir de nouveaux services à différents types d'utilisateurs (fixes ou mobiles), tout en restant compatible avec les réseaux de télécommunications de générations précédentes.

Ainsi, les réseaux de nouvelle génération doivent pouvoir mettre en œuvre des communications de natures très différentes selon les cas.

Des exemples et des modes de réalisation de l'état de la technique antérieure sont présentes dans les documents suivants : 3GPP TR 23.812, EP 1973295, RFC 2782 et 3GPP TS 29.228.

A cet effet, lorsqu'un utilisateur s'enregistre auprès du réseau de télécommunications, la norme 3GPP propose d'identifier l'utilisateur ainsi qu'une liste de caractéristiques liées à cet utilisateur, et de sélectionner des ressources du réseau en conséquence pour préparer la mise en œuvre ultérieure de communications.

En référence aux figures la et 1b, on décrit brièvement cette sélection telle que préconisée dans les documents TS 23.228 (section 5.2.2.3) et TS 24.229 (section 5.3.1.2) de la norme 3GPP.

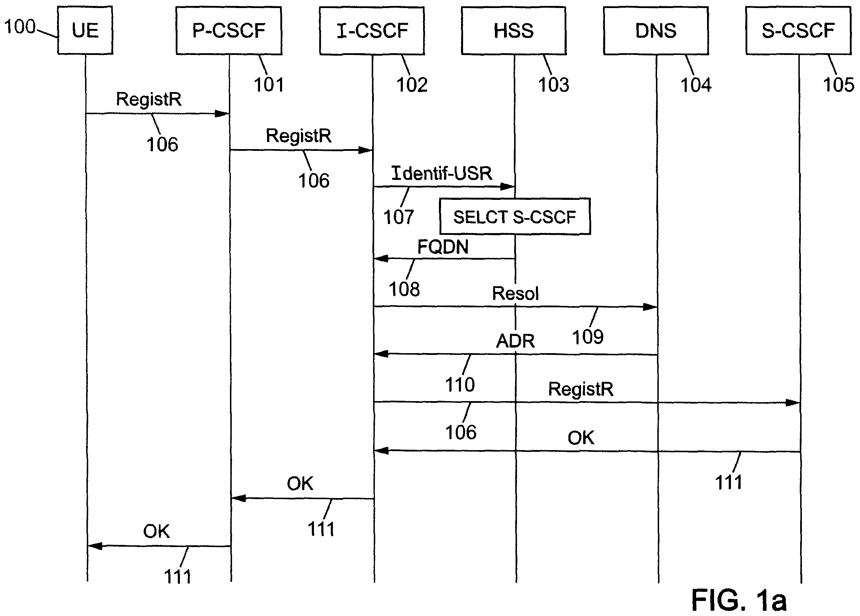

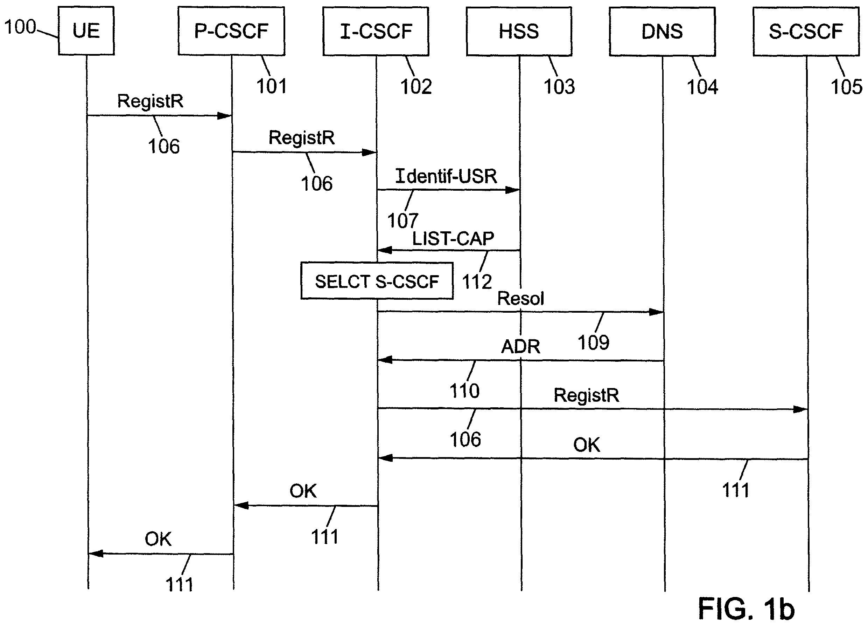

La figure 1 est un diagramme protocolaire illustrant les échanges entre un dispositif utilisateur 100, une unité d'accès 101 de type P-CSCF (« Proxy-Call Session Control Function »), une unité d'interrogation 102 de type I-CSCF (« Interrogating-Call Session Control Function »), un serveur d'authentification 103 de type HSS («Home Subscriber Server »), un serveur d'adresses 104 de type DNS (« Domain Name Server »), et une unité de service 105 de type S-CSCF (« Serving-Call Session Control Function »).

Lorsque le dispositif utilisateur se connecte au réseau de télécommunications, il émet une requête d'enregistrement 106 vers l'unité d'accès 101 afin de s'identifier sur le réseau. L'unité d'accès 101 sert de point d'entrée dans le réseau au dispositif utilisateur. Ensuite, l'unité d'accès 101 transmet la requête vers l'unité d'interrogation 102 qui va se charger d'identifier l'unité de service 105 qui va traiter cette requête d'enregistrement et gérer les communications de l'utilisateur.

A cet effet, l'unité d'interrogation 102 émet une requête d'identification 107 vers le serveur d'authentification 103. Le serveur d'authentification 103 vérifie alors si l'utilisateur est déjà enregistré ou non et si l'utilisateur est déjà associé à des ressources du réseau ou non.

On s'intéresse ici au cas où l'utilisateur n'est pas enregistré.

Le serveur d'authentification 103 fait alors une sélection d'une unité de service 105 à assigner au dispositif utilisateur pour la communication et délivre ensuite à l'unité d'interrogation 102 un identifiant 108 dit FQDN (« Fully Qualified Domain Name »). Cet identifiant représente une adresse symbolique sur le réseau de l'unité de service 105 à assigner à l'utilisateur.

L'unité d'interrogation 102 interroge alors le serveur d'adresse 104 en envoyant la requête 109 comportant le FQDN pour connaître l'adresse physique (adresse IP) de l'unité de service 105 à partir du FQDN. Le serveur d'adresses 104 fournit en réponse l'adresse physique 110 de l'unité de service 105.

L'unité d'interrogation 102 transmet alors la requête 106 vers l'unité de service 105, qui se charge d'authentifier l'utilisateur auprès du serveur d'authentification 103. Ensuite, l'unité de service renvoie un message d'acceptation 111 de l'enregistrement vers l'unité d'interrogation 102 qui le transmet au dispositif utilisateur via l'unité d'accès.

En référence à la figure 1b on décrit un autre exemple d'enregistrement. La figure 1b reprend les différents éléments décrits en référence à la figure la, et l'enregistrement débute de la même manière que précédemment, jusqu'à la réception par le serveur d'authentification 103 de la requête d'identification 107.

Cette fois, au lieu de sélectionner l'unité de service et de renvoyer une adresse symbolique de celui-ci, l'unité d'authentification revoie une liste 112 de caractéristiques attachées au profil de l'utilisateur vers l'unité d'interrogation 102. Ces caractéristiques sont également appelées « capacités » (« capabilities » en anglais) dans la norme déjà évoquée.

Sur réception de la liste de capacités, l'unité d'interrogation sélectionne une unité de service compatible avec les capacités de la liste. L'unité d'interrogation envoie alors la requête 109 au serveur d'adresses pour connaître l'adresse physique de l'unité de service sélectionnée à partir de son FQDN.

Le serveur d'adresse renvoie alors l'adresse physique de l'unité de service et l'enregistrement poursuit son cours comme précédemment évoqué.

La sélection de l'unité de service telle que préconisée dans la norme évoquée plus haut présente un certain nombre de problèmes.

L'opérateur doit associer à chaque adresse symbolique un groupe d'unités de service. Ainsi, une fois que l'unité d'interrogation a choisi un FQDN, il ne reçoit que les adresses physiques des unités de service associées. Cela limite le choix final de l'unité de service à utiliser, et empêche de faire le meilleur choix, par exemple si les unités de service associées au FQDN choisi ont un niveau de charge trop élevé. L'association initialement opérée par l'opérateur fixe une fois pour toutes la stratégie de choix de l'unité de service à utiliser.

La sélection de l'unité de service manque donc de flexibilité, et ne permet pas toujours le meilleur choix.

En outre, c'est l'unité d'interrogation qui effectue le choix de l'unité de service à partir des capacités. Ainsi, l'opérateur doit s'assurer que toutes les unités d'interrogation du réseau ont une liste à jour de toutes les capacités du réseau, de toutes les unités de service du réseau, et de toutes les correspondances entre ces unités de services et ces capacités.

La gestion du réseau reste donc complexe pour l'opérateur.

La présente invention vient améliorer la situation.

A cet effet, selon un premier aspect de l'invention, on propose un procédé mis en œuvre par un dispositif de type I-CSCF pour la sélection d'un équipement de type S-CSCF d'un réseau de télécommunications de type IMS lors de l'enregistrement d'un dispositif utilisateur pour mettre en œuvre des communications sur le réseau de télécommunications de type IMS, comportant les étapes suivantes :
a) réception (S30) d'un ensemble de caractéristiques associées à un abonné dudit dispositif utilisateur ;
b) formation (S31, S32) d'une première adresse symbolique pour l'interrogation d'un serveur d'adresses, à partir d'au moins une partie des caractéristiques dudit ensemble d'une part, et d'un nom de domaine d'adresses d'autre part ;
c) transmission (S33) de la première adresse au serveur d'adresses ;
d) réception (S34) à partir du nom de domaine d'adresses sur interrogation dudit serveur d'adresses d'une liste d'un ou plusieurs équipements de type S-CSCF compatibles avec ladite au moins une partie des caractéristiques dudit ensemble, ladite liste comportant pour chaque équipement compatible une adresse physique dudit équipement compatible ; et
e) sélection (S35) d'un équipement de type S-CSCF parmi la liste.

Les caractéristiques sont par exemple des capacités telles que définies par la norme 3GPP.

Les caractéristiques représentent par exemple un profil d'un abonné à un réseau de télécommunications, les types de communications que l'abonné est susceptible de mettre en œuvre, un niveau de sécurité à assurer pour la communication, une localisation géographique de l'équipement utilisateur, ou autre.

Par exemple, l'étape /e/ peut être effectuée lors de l'enregistrement d'un dispositif utilisateur.

Par exemple, la formation de l'adresse symbolique comporte une concaténation de symboles représentant la au moins une partie des caractéristiques de l'ensemble, avec le nom de domaine.

Par exemple encore, les caractéristiques sont représentées par un ou plusieurs symboles, et la formation de l'adresse symbolique comporte les étapes de :
- classement de la au moins une partie des caractéristiques de l'ensemble ;
- concaténation des symboles des caractéristiques selon le classement opéré ; et
- concaténation de la chaîne de symboles concaténés avec le nom de domaine d'adresses.

Par exemple, les symboles sont des entiers positifs codés sur un nombre de bits, et le classement est un classement dans l'ordre décroissant.

Le classement permet notamment d'obtenir une même liste de caractéristiques à partir de différents ensembles désordonnés des mêmes caractéristiques.

La formation de l'adresse symbolique selon l'invention permet une interrogation simple et rapide du serveur d'adresses qui peut alors rapidement sélectionner un ou plusieurs équipements d'après les caractéristiques.

On peut par exemple se reposer sur un serveur d'adresses tel qu'un DNS et bénéficier des performances de ce type de matériel. Les serveurs d'adresses ont un faible coût tout en offrant une grande robustesse et une grande fiabilité. En outre, ce type de matériel permet de partager la charge des requêtes sur le réseau.

Le choix de l'équipement dans la liste peut se faire selon différents critères comme par exemple une proximité géographique, une charge d'utilisation ou autre.

Par exemple, le procédé vise à sélectionner une unité de contrôle de session d'appel telle qu'une unité de service, lors de l'enregistrement d'un utilisateur.

Dans le cadre d'un réseau IMS, l'unité de contrôle de session d'appel sélectionnée peut par exemple être une unité de type S-CSCF.

La liste d'équipements peut aussi comporter pour chaque équipement, un champ représentatif d'un paramètre de charge courante d'utilisation dudit équipement.

Ainsi, la sélection de l'équipement peut être fondée sur le paramètre de charge courante des équipements de la liste.

Dans des modes de réalisation, l'ensemble de caractéristiques comporte des caractéristiques principales et des caractéristiques secondaires, l'étape b) est exécutée avec les caractéristiques principales et les caractéristiques secondaires, et le procédé comportant en outre les étapes de :
f) présélection dans la liste d'équipements reçue lors de l'étape d), de l'équipement dont la charge est la plus faible ;
g) test de charge de l'équipement présélectionné lors de l'étape f) en fonction du paramètre de charge associé ; et
h) sélection de l'équipement présélectionnée lors de l'étape f) si le test de charge de l'étape g) est satisfait, ou, sinon
i) réexécution des étapes b) à d), avec lesdites caractéristiques principales et sans lesdites caractéristiques secondaires ;
j) présélection dans la liste d'équipements reçue lors de l'étape i), de l'équipement dont la charge est la plus faible ;
k) test de charge de l'équipement présélectionné lors de l'étape j) en fonction du paramètre de charge associé et de comparaison d'une différence de charge entre l'équipement présélectionné lors de l'étape f) et l'équipement présélectionné lors de l'étape j) à un seuil ; et
l) sélection de l'équipement présélectionné lors de l'étape j) si le test de charge de l'étape k) est satisfait et si la différence est supérieure au seuil, ou, sinon de l'équipement présélectionné lors de l'étape f).

Le procédé itératif selon ces modes de réalisation permet de réaliser un compromis entre la charge des équipements susceptibles d'être sélectionnés et la possibilité de mettre en œuvre toutes les caractéristiques souhaitées, dont les caractéristiques secondaires (ou optionnelles).

Dans d'autres modes de réalisation, l'ensemble de caractéristiques comporte des caractéristiques principales et des caractéristiques secondaires, l'étape b) est exécutée avec lesdites caractéristiques principales et lesdites caractéristiques secondaires, et le procédé comportant en outre les étapes de :
m) test de charge des équipements de la liste d'équipements reçue lors de l'étape d), en fonction des paramètres de charge associés aux équipements ;
puis si le test de l'étape m) est n'est satisfait pour aucun des équipements de la liste:
n) présélection dans la liste d'équipements reçue lors de l'étape d), de l'équipement dont la charge est la plus faible ;
o) réexécution des étapes b) à d), avec lesdites caractéristiques principales et sans lesdites caractéristiques secondaires ;
p) présélection dans la liste d'équipement reçue lors de l'étape o), de l'équipement dont la charge est la plus faible ;
q) test de charge de l'équipement présélectionné lors de l'étape p) en fonction du paramètre de charge associé et de comparaison d'une différence de charge entre l'équipement présélectionné lors de l'étape n) et l'équipement présélectionné lors de l'étape p), à un seuil ; et
r) sélection d'un équipement de la liste reçue lors de l'étape o) par un tirage aléatoire pondéré par les paramètres de charge si le test de l'étape q) est satisfait et si la différence est supérieure au seuil, ou, sinon de l'équipement présélectionné lors de l'étape n) ; ou,
si le test de l'étape m) est satisfait :
s) sélection d'un équipement de la liste reçue lors de l'étape d) par un tirage aléatoire pondéré par les paramètres de charge.

Selon un deuxième aspect de l'invention, on prévoit un serveur d'adresses comportant une unité de mémoire pour stocker une table d'adresses, cette table comportant :
- des entrées pour des combinaisons de caractéristiques de communication sur un réseau de type IMS de télécommunications auquel appartient le serveur, lesdites caractéristiques étant associées à un abonné d'un dispositif utilisateur
- pour chaque entrée, une liste d'équipements de type S-CSCF du réseau compatibles avec la combinaison de caractéristiques correspondante ;
- pour chaque équipement de la liste, un champ de données pour un paramètre de charge d'utilisation de l'équipement, et un champ de données pour localiser l'équipement sur le réseau, ledit serveur comportant en outre
   une entrée pour recevoir une requête comportant des caractéristiques d'un abonné dans une adresse symbolique ;
   une unité de traitement pour établir une liste d'équipements de type S-CSCF compatibles avec les caractéristiques de l'abonné reçues en fonction de ladite table et des caractéristiques reçues ;
   une sortie pour transmettre la liste d'équipements de type S-CSCF.

Ce serveur d'adresses peut choisir rapidement et efficacement les équipements selon les caractéristiques souhaitées

Selon d'autres aspects de l'invention, il est prévu :
- un programme d'ordinateur comportant des instructions pour la mise en œuvre d'un procédé selon le premier aspect de l'invention lorsque le programme est exécuté par un processeur, par exemple, le processeur d'un équipement de gestion d'un réseau tel qu'une unité d'interrogation d'un réseau de type IMS;
- un support lisible par un ordinateur sur lequel est enregistré un tel programme d'ordinateur ; et
- un équipement de gestion de réseau pour la mise en œuvre d'un procédé selon le premier aspect de l'invention.

Les avantages procurés par le programme d'ordinateur, le support lisible par ordinateur, et l'équipement, tels que succinctement exposés ci-dessus, sont au moins identiques à ceux mentionnés plus haut en liaison avec le procédé selon l'invention.

D'autres caractéristiques et avantages de l'invention apparaîtront encore à la lecture de la description qui va suivre. Celle-ci est purement illustrative et doit être lue en regard des dessins annexés sur lesquels, en outre les figures 1a et 1b :
- la figure 2 illustre des échanges entre différentes entités mises en œuvre dans un procédé selon un mode de réalisation de l'invention ;
- la figure 3 est un organigramme d'étapes mises en œuvre dans un procédé selon un mode de réalisation de l'invention ;
- la figure 4 illustre une table de d'adresses selon un mode de réalisation de l'invention
- les figures 5 et 6 sont des organigrammes d'étapes mises en œuvre dans un procédé selon d'autres modes de réalisation de l'invention;
- la figure 7 illustre schématiquement un équipement de gestion de réseau selon un mode de réalisation de l'invention; et
- la figure 8 illustre schématiquement un serveur d'adresses selon un mode de réalisation de l'invention.

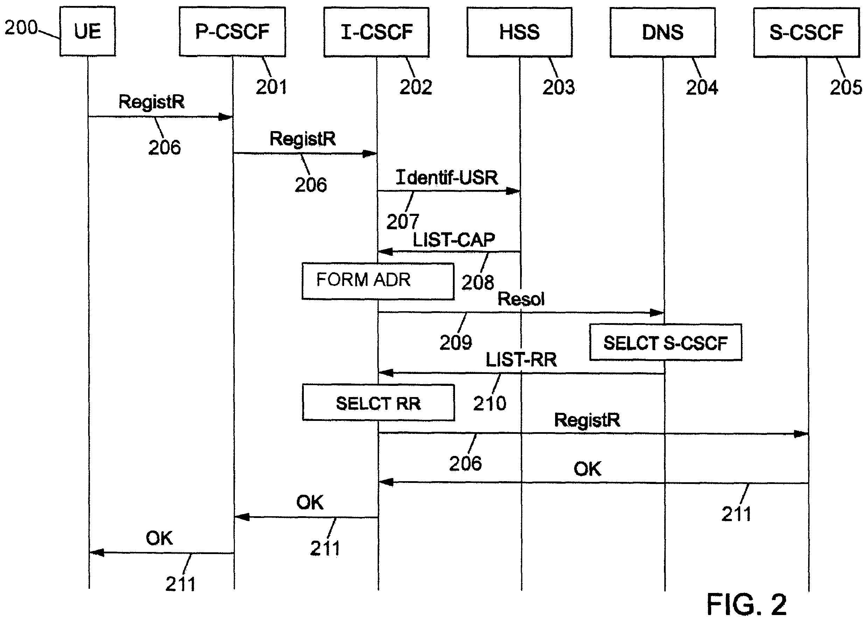

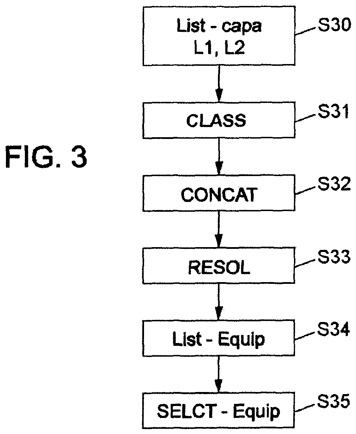

En référence aux figures 2 et 3, on décrit un contexte général de mise en œuvre d'un mode de réalisation de l'invention. La figure 2 représente des échanges entre différentes entités mises en œuvre, et la figure 3 est un organigramme d'étapes mises en œuvre.

Un dispositif utilisateur 200 souhaite s'enregistrer pour mettre en œuvre ultérieurement des communications sur un réseau de télécommunications. Par exemple, il s'agit d'un réseau de télécommunications de type IMS selon la norme 3GPP.

A cet effet, il émet une requête d'enregistrement 206 vers une unité d'accès 201 du réseau. Par exemple l'unité d'accès est une unité P-CSCF (« Proxy-Call Session Control Function »), et la requête est une requête « REGISTER » selon le protocole SIP (« Session Initiation Protocol »). L'unité d'accès transfère ensuite la requête vers une unité d'interrogation 202 qui va se charger de déterminer une unité de service 205 pour enregistrer l'utilisateur et mettre en œuvre ses communications ultérieures. Par exemple l'unité d'interrogation est une unité I-CSCF (« Interrogating -Call Session Control Function ») et l'unité de service est une unité S-CSCF (Serving-Call Session Control Function ») selon la norme 3GPP. C'est l'unité de service qui se chargera de la mise en œuvre effective des communications une fois le dispositif utilisateur enregistré, comme par exemple le contact de l'interlocuteur du dispositif utilisateur, le déclenchement de services particuliers ou autre. La fonction d'une telle unité de service apparaîtra à la personne du métier.

Sur réception de la requête d'enregistrement, l'unité d'interrogation envoie une requête d'identification 207 vers un serveur d'authentification 203. Par exemple le serveur d'authentification est un serveur HSS (« Home Subscriber Server ») selon la norme 3GPP. La requête est par exemple une requête du protocole DIAMETER de type « User registration status query » telle que définie dans le document 3GPP TS 29.228.

Le serveur d'authentification vérifie alors si une unité de service n'est pas déjà affectée à l'utilisateur. Si c'est le cas, le serveur d'authentification renvoie une identification de cette unité de service.

Lorsque ce n'est pas le cas, le serveur d'authentification renvoie en réponse une liste de caractéristiques associées à l'abonné rattaché au dispositif utilisateur. Par exemple, ces caractéristiques sont des « capacités » (« capabilities » en anglais) au sens de la norme 3GPP. Les caractéristiques peuvent par exemple concerner un profil d'utilisateur, une localisation du dispositif utilisateur, ou autre.

On suppose par exemple qu'un réseau IMS est déployé sur un territoire que l'opérateur a découpé en cinq zones géographiques Z1, Z2, Z3, Z4, et Z5.

L'opérateur a dédié des unités de service S-CSCF à différents types d'utilisateurs, par exemple les utilisateurs "grand public" et les utilisateurs "professionnels".

On se propose alors d'attribuer à chaque utilisateur (à l'enregistrement initial), une unité de service dans le respect de ces caractéristique (ou contraintes), en faisant un compromis entre l'attribution d'une unité de service située dans la zone géographique de rattachement de l'utilisateur, et le niveau de charge des unités de service.

L'opérateur définit alors les caractéristiques suivantes selon le tableau suivant :

| Caractéristique | Signification |
|---|---|
| 1 | Zone géographique Z1 |
| 2 | Zone géographique Z2 |
| 3 | Zone géographique Z3 |
| 4 | Zone géographique Z4 |
| 5 | Zone géographique Z5 |
| 11 | Utilisateur Grand public |
| 12 | Utilisateur Professionnel |

Dans cet exemple, les caractéristiques sont représentées par des nombres entiers. Selon la norme 3GPP par exemple, les caractéristiques sont représentées par des entiers positifs codés sur 32 bits.

L'unité d'interrogation reçoit une liste de ces caractéristiques lors de l'étape S30, puis forme une adresse symbolique pour interroger un serveur d'adresses et récupérer l'identification sur le réseau d'unités de service susceptibles de mettre en œuvre la communication selon les caractéristiques.

Par exemple, l'opérateur du réseau affecte des unités de service selon différentes combinaisons des caractéristiques définies. Le tableau ci-dessous résume ces affectations :

| Unité de service | Affectation géographique | Affectation de service |
|---|---|---|
| cg1.example.com | Zone Z1 | Grand Public |
| cg2.example.com | Zone Z1 | Grand Public |
| cp.example.com | Zone Z1 | Professionnel |
| nog.example.com | Zone Z2 | Grand Public |
| neg.example.com | Zone Z3 | Grand Public |
| np.example.com | Zones Z2 et Z3 | Professionnel |
| seg.example.com | Zone Z4 | Grand Public |
| sep.example.com | Zone Z4 | Professionnel |
| sog.example.com | Zone Z5 | Grand Public |
| sop.example.com | Zone Z5 | Professionnel |

Pour former l'adresse symbolique, l'unité d'interrogation dispose d'un nom de domaine qui représente le suffixe commun des adresses symboliques utilisées dans le réseau.

Par exemple, le nom de domaine est de la forme « s-cscf.example.com ». Ce nom de domaine désigne alors le serveur du domaine « example.com » qui stocke les adresses des unités S-CSCF.

L'unité d'interrogation commence par classer les caractéristiques reçues lors de l'étape S31. Par exemple, elle ordonne les caractéristiques par ordre décroissant.

Ce classement vise à réduire le nombre de combinaisons de caractéristiques à identifier sur le réseau. On peut donc envisager d'autres types de classement.

Par exemple, l'unité d'interrogation reçoit une liste de caractéristiques représentées par les entiers 1 et 11. Elle classe ensuite les caractéristiques et les concatène à l'identifiant pour obtenir l'adresse symbolique « 11-1.S-CSCF.example.com » lors de l'étape S32.

L'adresse symbolique peut aussi comporter une indication du service et du protocole utilisés.

L'unité d'interrogation envoie alors une requête de résolution 209 de l'adresse symbolique formée vers le serveur d'adresses 204 lors de l'étape S33. Par exemple, il s'agit d'une requête DNS de type SRV dont la section « QUESTION » contient les éléments suivants :
QNAME: _sip._udp.11-1.s-cscf.example.com
QTYPE: SRV
QCLASS: IN.

Les préfixes « _sip » et « _udp » précisent le service et le protocole utilisés. Le serveur d'adresse sélectionne alors une ou plusieurs unités de service compatibles avec les caractéristiques contenues dans l'adresse symbolique. Il renvoie ensuite une liste 210 des unités de service compatibles. Cette liste comporte pour chaque unité de service, une adresse physique de celle-ci sur le réseau.

Par exemple, selon une implémentation d'un serveur DNS, le serveur d'adresse renvoie les éléments « RR SRV » (« Ressource Records » de type « SRV ») et RR A ((« Ressource Records » de type « A »). Une liste de ce type peut comporter les informations suivantes :

| |
|---|
| NAME:_sip. _udp.11-1.s-scf.example.com |
| TYPE: SRV |
| CLASS: IN |
| TTL: 5 |
| RDLENGTH: 25 |
| RDATA: 0 57 5060 cg1.example.com. |
| NAME:_sip. _udp.11-1.s-scf.example.com |
| TYPE: SRV |
| CLASS: IN |
| TTL: 5 |
| RDLENGTH: 25 |
| RDATA: 0 55 5060 cg2.example.com. |
| NAME: cg1.example.com. |
| TYPE: A |
| CLASS: IN |
| TTL: 3600 |
| RDLENGTH: 4 |
| RDATA: 10.19.80.71 |
| NAME: cg2.example.com. |
| TYPE: A |
| CLASS: IN |
| TTL: 3600 |
| RDLENGTH: 4 |
| RDATA: 10.19.80.92 |

L'unité d'interrogation reçoit la liste lors de l'étape S34 et sélectionne un serveur 205 parmi la liste lors de l'étape S35. L'unité d'interrogation lit l'adresse physique associée pour ensuite transmettre la requête d'enregistrement 206 à l'unité de service. L'unité de service renvoie alors un message d'acceptation 211 vers l'unité d'interrogation qui la transmet au dispositif utilisateur via l'unité d'accès.

L'unité de service se charge alors de mettre en œuvre la communication sollicitée.

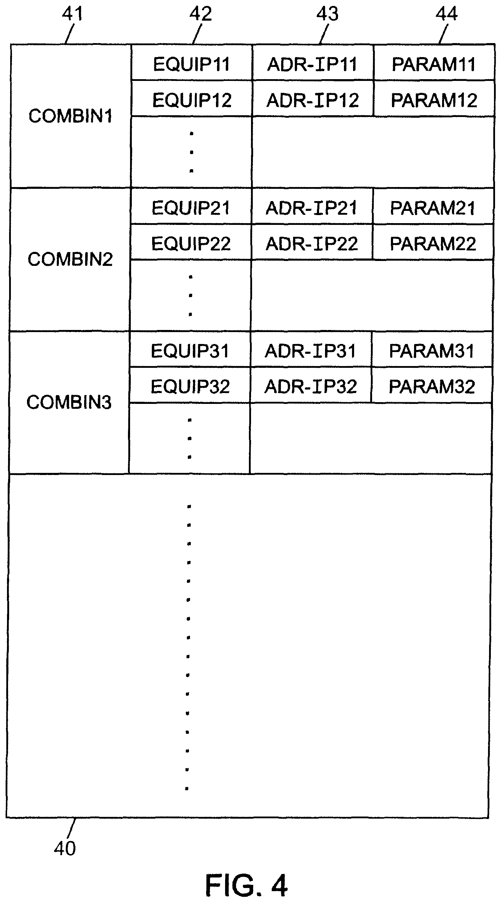

En référence à la figure 4, on décrit une table d'adresses d'un serveur d'adresses selon un mode de réalisation de l'invention.

Cette table comporte différentes entrées 40 pour toutes les combinaisons COMBIN1, COMBIN2, COMBIN3, etc. de caractéristiques possibles du réseau.

Dans l'exemple de la norme 3GPP, il s'agit de listes de nombres représentant les capacités du réseau.

Afin de permettre une identification rapide des combinaisons contenues dans les adresses symboliques envoyées par l'unité d'interrogation, les combinaisons sont des listes classées par ordre décroissant comme cela est le cas dans les adresses symboliques. Si un autre type de classement est utilisé pour la réalisation des adresses symboliques, les listes de la table d'adresses reprennent le même ordre.

Comme déjà évoqué, il s'agit de permettre d'éviter que plusieurs entrées représentent en fait la même liste de caractéristiques, mais dans un ordre différent.

Pour chaque entrée, la table contient un ensemble d'équipements 42 compatibles (ou RR SRV) avec les caractéristiques de l'entrée en question. A chaque équipement est associé un champ de données d'adresse 43 représentant l'adresse physique de l'équipement sur le réseau, par exemple son adresse IP (« Internet Protocol »), et un champ de données 44 représentant un paramètre de charge courante de l'équipement.

Le paramètre de charge courante peut par exemple correspondre au paramètre « Weight » spécifié dans le document IETF RFC 2782. Ce paramètre est dans cet exemple un paramètre de charge mis à jour régulièrement par une entité du réseau dite LDF (« Load Détection Function », non représentée) chargée de surveiller les conditions de charge des équipements. Plus la charge de l'équipement est élevée (plus l'équipement est utilisé) et plus le paramètre de ce champ Weight est faible. La mise à jour dynamique du paramètre Weight peut par exemple se faire selon la norme RFC 2136.

Afin d'éviter les redondances dans la table d'adresses, on peut utiliser une structure arborescente (non représentée). Dans cette structure, chaque nœud représente une caractéristique. Chaque nœud suivant et issu d'un nœud courant représente une caractéristique suivant la caractéristique du nœud courant selon le classement des caractéristiques choisi (dans l'exemple de la norme 3GPP, classement décroissant). A chaque nœud courant est associé une liste d'équipements compatibles avec la caractéristique courante, et les caractéristiques associées aux nœuds dont est issu le nœud courant.

Ainsi, comme le serveur d'adresses reçoit une liste de caractéristiques classées, il lui suffit de sélectionner comme nœud d'entrée la première caractéristique contenue dans l'adresse symbolique, puis comme nœud suivant la deuxième caractéristique, et ainsi de suite jusqu'à la dernière caractéristique contenue dans l'adresse symbolique. La liste d'équipements compatibles renvoyée par le serveur d'adresse sera alors la liste d'équipements associée au dernier nœud accédé.

Avant de renvoyer la liste, le serveur d'adresse peut ordonner les équipements selon leur paramètre de charge, par exemple pour faire figurer en premier les équipements les moins chargés.

On peut donc gérer facilement la sélection des équipements avec la tenue à jour de la table du serveur d'adresses.

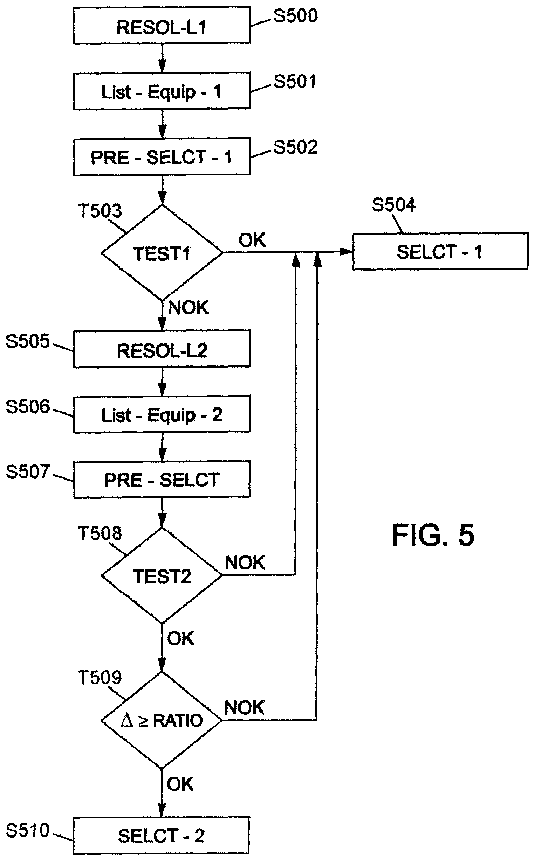

En référence à la figure 5, on décrit un mode de réalisation de la sélection d'un équipement.

Dans ce mode de réalisation, on suppose que lors de la réception des caractéristiques, l'unité d'interrogation reçoit des caractéristiques principales (ou obligatoires) et des caractéristiques secondaires (ou optionnelles) selon deux listes (ou sous-listes) respectives L1 et L2. On suppose que le service peut être mis en œuvre sans les caractéristiques secondaires, mais doit obligatoirement être mise en œuvre avec les caractéristiques principales. Par exemple, les caractéristiques principales concernent l'abonnement de l'utilisateur, et les caractéristiques secondaires concernent des paramètres de qualité de service. Ainsi, le réseau mettra en œuvre la communication selon l'abonnement et avec, si possible, avec la meilleure qualité de service possible.

Dans ce mode de réalisation, lors de l'étape S500, on interroge le serveur d'adresses en utilisant une adresse symbolique formée comme décrit précédemment, avec à la fois les caractéristiques principales et les caractéristiques secondaires.

On reçoit alors une première liste d'équipements en réponse lors de l'étape S501.

On présélectionne dans cette liste l'équipement dont la charge courante est la plus faible lors de l'étape S502. Dans l'exemple donné ci-avant, on choisit l'équipement dont le champ « Weight » est le plus élevé.

On passe alors à l'étape de test T503 pour vérifier si cet équipement satisfait à un test de charge. Par exemple, il s'agit de comparer la valeur du paramètre de charge (« Weight ») à un seuil stocké dans l'unité d'interrogation.

Le seuil peut être déterminé par la personne du métier selon plusieurs critères, selon le choix du paramètre pour mesurer la charge des unités de service.

Si le test de l'étape T503 est satisfait, par exemple le paramètre est supérieur ou égal au seuil, on sélectionne effectivement l'équipement lors de l'étape S504, et on peut transférer la requête d'enregistrement comme déjà évoqué.

Si le test de l'étape T503 n'est pas satisfait, par exemple si le paramètre de charge est inférieur au seuil, on forme une deuxième adresse symbolique comme précédemment évoqué, avec cette fois les caractéristiques principales uniquement de la liste L1. Les caractéristiques secondaires de la liste L2 sont cette fois ignorées.

Lorsque cette deuxième adresse symbolique est formée, on interroge le serveur d'adresses lors de l'étape S505.

Ensuite, on reçoit lors de l'étape S506 une deuxième liste d'équipements, et on présélectionne lors de l'étape S507 l'équipement de cette liste dont la charge est la plus faible.

On passe alors à l'étape T508 de test de charge. Par exemple, il s'agit du même test que celui de l'étape T503.

Si le test de l'étape T508 est négatif, on passe à l'étape S504 pour sélectionner l'équipement présélectionné lors de l'étape S502.

Si le test de l'étape T508 est positif on passe au test de l'étape T509. Lors de ce test, on vérifie si la différence de charge entre les équipements présélectionnés lors des étapes S502 et S507 justifie ou non de sélectionner un équipement qui ne respecte pas les caractéristiques secondaires (c'est-à-dire l'équipement présélectionné lors de l'étape S507).

Par exemple, on compare un ratio entre les paramètres de charge des équipements présélectionnés lors des étapes S602 et S507 à un seuil préalablement stocké auprès de l'unité d'interrogation.

Si le test de l'étape S509 est négatif, par exemple le ratio est inférieur au seuil, la différence de charge entre les deux équipements présélectionnés est considérée comme trop faible pour que l'on choisisse un équipement non compatible avec les caractéristiques secondaires par rapport à un équipement qui est compatible. On retourne alors à l'étape S504 pour sélectionner l'équipement présélectionné à partir de la première liste, comme déjà évoqué.

Si le test de l'étape S509 est positif, par exemple le ratio est supérieur ou égal au seuil, on passe à l'étape S510 de sélection de l'équipement présélectionné lors de l'étape S507, et on continue la mise en œuvre de la communication comme déjà évoqué.

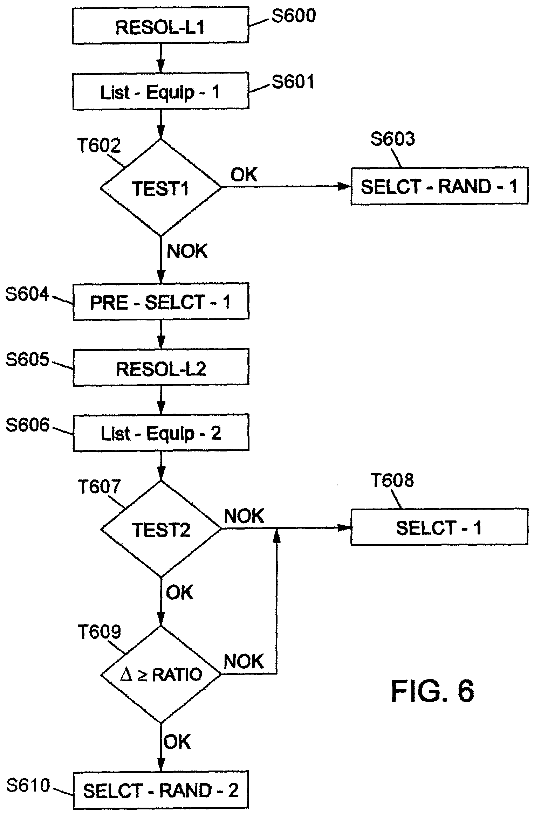

En référence à la figure 6, on décrit une variante du mode de réalisation précédent.

Comme précédemment, on suppose que lors de la réception des caractéristiques, l'unité d'interrogation reçoit des caractéristiques principales et des caractéristiques secondaires selon deux listes (ou sous-listes) respectives L1 et L2.

Lors de l'étape S600, on interroge le serveur d'adresses en utilisant une adresse symbolique formée comme décrit précédemment, avec à la fois les caractéristiques principales de la liste L1 et les caractéristiques secondaires de la liste L2.

On reçoit alors une première liste d'équipements en réponse lors de l'étape S601.

On passe alors à l'étape T602 de test pour déterminer s'il existe dans la liste d'équipements reçue, un équipement dont la charge est satisfaisante pour la mise en œuvre de la communication. Par exemple, dans le cas de la norme 3GPP on détermine s'il existe dans la liste un équipement dont le paramètre « Weight » est supérieur à un seuil.

Si le test de l'étape T602 est positif, on passe à l'étape S603 de sélection d'un équipement parmi la liste. Cette sélection se fait par tirage aléatoire, pondéré par le paramètre de charge des équipements.

On peut par exemple appliquer une sélection telle que spécifiée dans la norme RFC 2782.

On calcule des sommes glissantes des paramètres « Weight » associés aux équipements. Par exemple, si les équipements ont des paramètres 15, 3, 83, les sommes glissantes associées sont respectivement 15, 18 (=15+3), 101 (=15+3+8). On tire alors un entier entre 0 et la somme totale des paramètres selon un tirage aléatoire uniforme, et on sélectionne le premier équipement de la liste dont somme glissante associée est supérieure ou égale au nombre entier tiré. En cas d'échec de connexion avec l'équipement sélectionné, on retire cet équipement de la liste et on recommence le tirage jusqu'à se connecter à un équipement.

Si le test de l'étape T602 est négatif, c'est-à-dire qu'il n'y a pas dans la liste reçue lors de l'étape S601 d'équipement dont la charge courante est satisfaisante, on passe à l'étape S604 de présélection de l'équipement dont la charge est la plus faible.

Ensuite, on forme une deuxième adresse symbolique comme précédemment évoqué, avec cette fois les caractéristiques principales uniquement de la liste L1. Les caractéristiques secondaires de la liste L2 sont cette fois ignorées.

Lorsque cette deuxième adresse symbolique est formée on interroge le serveur d'adresses lors de l'étape S605.

Ensuite, on reçoit lors de l'étape S606 une deuxième liste d'équipements.

On passe alors à l'étape de test T607, qui se trouve être similaire au test de l'étape T602.

Si le test de l'étape T607 est négatif, on passe à l'étape S608 de sélection de l'équipement présélectionné lors de l'étape S604.

Si le test de l'étape T607 est positif on passe au test T609 pour déterminer s'il existe dans la liste un équipement dont le ratio du paramètre de charge avec le paramètre de charge associé à l'équipement présélectionné lors de l'étape S604 est supérieur ou non à un seuil.

Le test de l'étape T609 a pour but de vérifier s'il existe dans la liste reçue un ou plusieurs équipements dont le niveau de charge justifie de le sélectionner plutôt qu'un équipement qui est compatible avec toutes les caractéristiques (principales et secondaires).

Si le test de l'étape T609 est négatif, on passe à l'étape T608, sinon on passe à l'étape T610.

Lors de l'étape T610 on sélectionne un équipement dans la liste de la même manière que celle décrite pour l'étape S603.

Les modes de réalisation décrits ci-avant l'ont été dans le contexte de la norme 3GPP, mais la personne du métier peut trouver dans la présente description les éléments lui permettant d'adapter l'invention à d'autres normes et à d'autres types de matériels que ceux décrits ici à titre d'illustration.

Un programme d'ordinateur comportant des instructions pour la mise en œuvre du procédé selon l'invention peut être réalisé selon un algorithme général déduit des organigrammes généraux des figures 3, 5, et 6, du diagramme de la figure 2 et de la présente description détaillée.

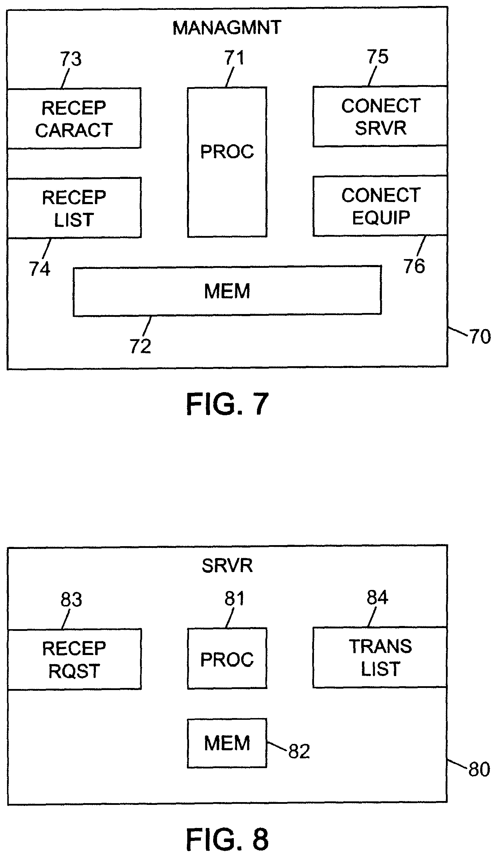

En référence à la figure 7, on décrit un équipement de gestion selon un mode de réalisation de la présente invention. Par exemple, cet équipement est une unité d'interrogation de type I-CSCF d'un réseau IMS.

Cet équipement 70 comporte une unité de traitement 71 pour mettre en œuvre un procédé selon la présente invention. A cet effet, il dispose d'une unité de mémoire 72. Cette unité de mémoire peut comporter différents types de mémoire. Par exemple, l'unité de mémoire comporte une mémoire pour stocker des données de calcul. L'unité de mémoire peut également comporter une mémoire pour le stockage d'un programme d'ordinateur selon la présente invention pour son exécution par un processeur de l'unité de traitement. L'équipement comporte également des ports de communication, dont des entrées et des sorties pour communiquer via un réseau de communication. Notamment, l'équipement comporte une entrée 73 pour recevoir un ensemble de caractéristiques, une entrée 74 pour recevoir une liste d'équipements, une sortie 75 pour se connecter à un serveur d'adresses selon une adresse symbolique formée selon l'invention, et une sortie 76 pour se connecter à un équipement sélectionné selon l'invention.

En référence à la figure 8, on décrit un serveur d'adresses selon un mode de réalisation de la présente invention.

Ce serveur 80 comporte une unité de traitement 81 pour établir une liste d'équipements compatibles avec des caractéristiques reçues dans une adresse symbolique. Le serveur comporte également une unité de mémoire 82. Cette unité de mémoire peut comporter différents types de mémoire. Par exemple, l'unité de mémoire comporte une mémoire pour stocker des données de calcul. L'unité de mémoire peut également comporter une mémoire pour le stockage d'une table d'adresses selon l'invention. Le serveur comporte également des entrées et des sorties pour communiquer via un réseau de communication. Notamment, l'équipement comporte une entrée 83 pour recevoir une requête comportant des caractéristiques de communication et une sortie 84 pour transmettre une liste d'équipements selon l'invention.

La présente invention a été décrite et illustrée dans la présente description détaillée et dans les figures. La présente invention ne se limite pas aux formes de réalisation présentées. D'autres variantes et modes de réalisation peuvent être déduits et mis en œuvre par la personne du métier à la lecture de la présente description et des figures annexées.

Dans les revendications, le terme "comporter" n'exclut pas d'autres éléments ou d'autres étapes. L'article indéfini « un » n'exclut pas le pluriel. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

## Revendications

1. Procédé mise en œuvre par un dispositif de type I-CSCF pour la sélection d'un équipement de type S-CSCF d'un réseau de télécommunications de type IMS lors de l'enregistrement d'un dispositif utilisateur pour mettre en œuvre des communications sur le réseau de télécommunications de type IMS, comportant les étapes suivantes :
a) réception (S30) d'un ensemble de caractéristiques associées à un abonné dudit dispositif utilisateur ;
b) formation (S31, S32) d'une première adresse symbolique pour l'interrogation d'un serveur d'adresses, à partir d'au moins une partie des caractéristiques dudit ensemble d'une part, et d'un nom de domaine d'adresses d'autre part ;
c) transmission (S33) de la première adresse au serveur d'adresses ;
d) réception (S34) à partir du nom de domaine d'adresses sur interrogation dudit serveur d'adresses d'une liste d'un ou plusieurs équipements de type S-CSCF compatibles avec ladite au moins une partie des caractéristiques dudit ensemble, ladite liste comportant pour chaque équipement compatible une adresse physique dudit équipement compatible ; et
e) sélection (S35) d'un équipement de type S-CSCF parmi la liste.

2. Procédé selon la revendication 1, dans lequel l'étape /e/ est effectuée lors de l'enregistrement d'un dispositif utilisateur.

3. Procédé selon la revendication 1, dans lequel l'étape de formation de la première adresse comporte une concaténation de symboles représentant la au moins une partie des caractéristiques dudit ensemble, avec le nom de domaine.

4. Procédé selon la revendication 1, dans lequel les caractéristiques sont représentées par un ou plusieurs symboles, et dans lequel la formation de la première adresse symbolique comporte les étapes de :
- classement de la au moins une partie des caractéristiques de l'ensemble ;
- concaténation des symboles des caractéristiques selon le classement opéré ; et
- concaténation de la chaîne de symboles concaténés avec le nom de domaine.

5. Procédé selon la revendication 1, dans lequel la liste d'équipements comporte pour chaque équipement, un champ (44) représentatif d'un paramètre de charge courante d'utilisation dudit équipement.

6. Procédé selon la revendication 5, dans lequel la sélection de l'équipement est fondée sur les paramètres de charge courante des équipements de la liste.

7. Procédé selon la revendication 5, dans lequel l'ensemble de caractéristiques comporte des caractéristiques principales et des caractéristiques secondaires, et dans lequel l'étape b) est exécutée avec lesdites caractéristiques principales et lesdites caractéristiques secondaires, le procédé comportant en outre les étapes de :
f) présélection (S502) dans la liste d'équipements reçue lors de l'étape d), de l'équipement dont la charge est la plus faible ;
g) test de charge (T503) de l'équipement présélectionné lors de l'étape f) en fonction du paramètre de charge associé ; et
h) sélection (S504) de l'équipement présélectionnée lors de l'étape f) si le test de charge de l'étape g) est satisfait, ou, sinon
i) réexécution des étapes b) à d), avec lesdites caractéristiques principales et sans lesdites caractéristiques secondaires ;
j) présélection (S507) dans la liste d'équipements reçue lors de l'étape i), de l'équipement dont la charge est la plus faible ;
k) test de charge (T508) de l'équipement présélectionné lors de l'étape j) en fonction du paramètre de charge associé et de comparaison (T509) d'une différence de charge entre l'équipement présélectionné lors de l'étape f) et l'équipement présélectionné lors de l'étape j) à un seuil ; et
1) sélection (S510) de l'équipement présélectionné lors de l'étape j) si le test de charge de l'étape k) est satisfait et si la différence est supérieure au seuil, ou, sinon de l'équipement présélectionné lors de l'étape f).

8. Procédé selon la revendication 5, dans lequel l'ensemble de caractéristiques comporte des caractéristiques principales et des caractéristiques secondaires, et dans lequel l'étape b) est exécutée avec lesdites caractéristiques principales et lesdites caractéristiques secondaires, le procédé comportant en outre les étapes de :
m) test de charge (T602) des équipements de la liste d'équipements reçue lors de l'étape d), en fonction des paramètres de charge associés aux équipements ;
puis si le test de l'étape m) est n'est satisfait pour aucun des équipements de la liste:
n) présélection (S604) dans la liste d'équipements reçue lors de l'étape d), de l'équipement dont la charge est la plus faible ;
o) réexécution des étapes b) à d), avec lesdites caractéristiques principales et sans lesdites caractéristiques secondaires ;
p) présélection (S606) dans la liste d'équipement reçue lors de l'étape o), de l'équipement dont la charge est la plus faible ;
q) test de charge (T607) de l'équipement présélectionné lors de l'étape p) en fonction du paramètre de charge associé et de comparaison (T609) d'une différence de charge entre l'équipement présélectionné lors de l'étape n) et l'équipement présélectionné lors de l'étape p), à un seuil ; et
r) sélection (S610) d'un équipement de la liste reçue lors de l'étape o) par un tirage aléatoire pondéré par les paramètres de charge si le test de l'étape q) est satisfait et si la différence est supérieure au seuil, ou, sinon de l'équipement présélectionné lors de l'étape n) ; ou,
si le test de l'étape m) est satisfait :
s) sélection (S603) d'un équipement de la liste reçue lors de l'étape d) par un tirage aléatoire pondéré par les paramètres de charge.

9. Programme d'ordinateur comportant des instructions pour la mise en œuvre d'un procédé selon la revendication 1, lorsqu'il est exécuté par un processeur.

10. Serveur d'adresses comportant une unité de mémoire stockant une table d'adresses (40), ladite table comportant :
- des entrées (41) pour des combinaisons de caractéristiques de communication sur un réseau de télécommunications de type IMS auquel appartient le serveur, lesdites caractéristiques étant associées à un abonné d'un dispositif utilisateur;
- pour chaque entrée, une liste d'équipements (42) de type S-CSCF du réseau compatibles avec la combinaison de caractéristiques correspondante ;
- pour chaque équipement de la liste, un champ de données (44) pour un paramètre de charge d'utilisation de l'équipement, et un champ de données (43) pour localiser l'équipement sur le réseau
ledit serveur comportant en outre
une entrée (83) pour recevoir une requête comportant des caractéristiques d'un abonné dans une adresse symbolique ;
une unité de traitement (81) pour établir une liste d'équipements de type S-CSCF compatibles avec les caractéristiques de l'abonné reçues en fonction de ladite table et des caractéristiques reçues ;
une sortie (84) pour transmettre la liste d'équipements de type S-CSCF.

11. Serveur selon la revendication 10, comportant en outre une entrée (83) pour recevoir une adresse symbolique obtenue par la mise en œuvre du procédé selon la revendication 1, et unité de traitement (81) pour choisir une entrée de la table d'adresse correspondante.

12. Equipement de gestion de type I-CSCF d'un réseau de télécommunications de type IMS pour la sélection d'un équipement de type S-CSCF du réseau lors de l'enregistrement d'un dispositif utilisateur pour mettre en œuvre des communications, comportant :
- un premier port de communication (73) pour recevoir un ensemble de caractéristiques associées à un abonné dudit dispositif utilisateur;;
- une unité de traitement (71) pour former une première adresse symbolique pour l'interrogation d'un serveur d'adresses, à partir d'au moins une partie des caractéristiques dudit ensemble d'une part, et d'un nom de domaine d'adresses d'autre part ;
- un deuxième port de communication (75) pour transmettre la première adresse au serveur d'adresses ;
- un troisième port de communication (74) pour recevoir à partir du nom de domaine d'adresses sur interrogation dudit serveur d'adresses une liste d'un ou plusieurs équipements de type S-CSCF compatibles avec ladite au moins une partie des caractéristiques dudit ensemble, ladite liste comportant pour chaque équipement compatible une adresse physique dudit équipement compatible ; et dans lequel l'unité de traitement sélectionne un équipement de type S-CSCF parmi la liste.

## Patentansprüche

1. Verfahren, das durch eine I-CSCF-Vorrichtung zur Auswahl einer S-CSCF-Ausrüstung eines IMS-Telekommunikationsnetzwerks bei der Registrierung einer Benutzervorrichtung umgesetzt wird, um Kommunikationen in dem IMS-Telekommunikationsnetzwerk durchzuführen, umfassend die folgenden Schritte:
a) Empfangen (S30) eines Satzes von Eigenschaften, die mit einem Teilnehmer der Benutzervorrichtung in Verbindung stehen;
b) Bilden (S31, S32) einer ersten symbolischen Adresse zur Abfrage eines Adressservers anhand mindestens eines Teils der Eigenschaften des Satzes einerseits und eines Adressen-Domainnamens andererseits;
c) Übertragen (S33) der ersten Adresse an den Adressserver;
d) Empfangen (S34), anhand des Adressen-Domainnamens bei Abfrage des Adressservers, einer Liste mit einer oder mehreren S-CSCF-Ausrüstungen, die zu dem mindestens einen Teil der Eigenschaften des Satzes kompatibel sind, wobei die Liste für jede kompatible Ausrüstung eine physische Adresse der kompatiblen Ausrüstung aufweist; und
e) Auswählen (S35) einer S-CSCF-Ausrüstung aus der Liste.

2. Verfahren nach Anspruch 1, wobei der Schritt e) bei der Registrierung einer Benutzervorrichtung durchgeführt wird.

3. Verfahren nach Anspruch 1, wobei der Schritt des Bildens der ersten Adresse eine Verkettung von Symbolen, die den mindestens einen Teil der Eigenschaften des Satzes darstellen, mit dem Domainnamen aufweist.

4. Verfahren nach Anspruch 1, wobei die Eigenschaften von einem oder mehreren Symbolen dargestellt werden, und wobei das Bilden der ersten symbolischen Adresse die folgenden Schritte umfasst:
- Sortieren des mindestens einen Teils der Eigenschaften des Satzes;
- Verketten der Symbole der Eigenschaften gemäß der durchgeführten Sortierung; und
- Verketten der Kette von verketteten Symbolen mit dem Domainnamen.

5. Verfahren nach Anspruch 1, wobei die Liste mit Ausrüstungen für jede Ausrüstung ein Feld (44) aufweist, das einen Parameter einer aktuellen Nutzungslast der Ausrüstung darstellt.

6. Verfahren nach Anspruch 5, wobei das Auswählen der Ausrüstung auf den Parametern einer aktuellen Last der Ausrüstungen der Liste beruht.

7. Verfahren nach Anspruch 5, wobei der Satz von Eigenschaften Haupteigenschaften und Sekundäreigenschaften aufweist, und wobei der Schritt b) mit den Haupteigenschaften und den Sekundäreigenschaften ausgeführt wird, wobei das Verfahren ferner die folgenden Schritte umfasst:
f) Vorauswählen (S502) in der Liste mit Ausrüstungen, die beim Schritt d) empfangen wurde, der Ausrüstung, deren Last die geringste ist;
g) Prüfen der Last (T503) der Ausrüstung, die beim Schritt f) vorausgewählt wurde, in Abhängigkeit von dem zugehörigen Lastparameter; und
h) Auswählen (S504) der Ausrüstung, die beim Schritt f) vorausgewählt wurde, wenn die Lastprüfung des Schritts g) bestanden ist, oder andernfalls
i) erneutes Ausführen der Schritte b) bis d) mit den Haupteigenschaften und ohne die Sekundäreigenschaften;
j) Vorauswählen (S507) in der Liste mit Ausrüstungen, die beim Schritt i) empfangen wurde, der Ausrüstung, deren Last die geringste ist;
k) Prüfen der Last (T508) der Ausrüstung, die beim Schritt j) vorausgewählt wurde, in Abhängigkeit von dem zugehörigen Lastparameter und des Vergleichens (T509) einer Lastdifferenz zwischen der Ausrüstung, die beim Schritt f) vorausgewählt wurde, und der Ausrüstung, die beim Schritt j) vorausgewählt wurde, mit einer Schwelle; und
1) Auswählen (S510) der Ausrüstung, die beim Schritt j) vorausgewählt wurde, wenn die Lastprüfung des Schritts k) bestanden ist und wenn die Differenz größer als die Schwelle ist, oder andernfalls der Ausrüstung, die beim Schritt f) vorausgewählt wurde.

8. Verfahren nach Anspruch 5, wobei der Satz von Eigenschaften Haupteigenschaften und Sekundäreigenschaften aufweist, und wobei der Schritt b) mit den Haupteigenschaften und den Sekundäreigenschaften ausgeführt wird, wobei das Verfahren ferner die folgenden Schritte umfasst:
m) Prüfen der Last (T602) der Ausrüstungen der Liste mit Ausrüstungen, die beim Schritt d) empfangen wurde, in Abhängigkeit von Lastparametern, die mit den Ausrüstungen in Verbindung stehen;
dann, wenn die Prüfung des Schritts m) ist für keine der Ausrüstungen der Liste bestanden ist:
n) Vorauswählen (S604) in der Liste mit Ausrüstungen, die beim Schritt d) empfangen wurde, der Ausrüstung, deren Last die geringste ist;
o) erneutes Ausführen der Schritte b) bis d) mit den Haupteigenschaften und ohne die Sekundäreigenschaften;
p) Vorauswählen (S606) in der Liste mit Ausrüstung, die beim Schritt o) empfangen wurde, der Ausrüstung, deren Last die geringste ist;
q) Prüfen der Last (T607) der Ausrüstung, die beim Schritt p) vorausgewählt wurde, in Abhängigkeit von dem zugehörigen Lastparameter und des Vergleichens (T609) einer Lastdifferenz zwischen der Ausrüstung, die beim Schritt n) vorausgewählt wurde, und der Ausrüstung, die beim Schritt p) vorausgewählt wurde, mit einer Schwelle; und
r) Auswählen (S610) einer Ausrüstung der Liste, die beim Schritt o) empfangen wurde, durch eine Zufallsziehung, die mit den Lastparametern gewichtet ist, wenn die Lastprüfung des Schritts q) bestanden ist und wenn die Differenz größer als die Schwelle ist, oder andernfalls der Ausrüstung, die beim Schritt n) vorausgewählt wurde; oder,
wenn die Prüfung des Schritts m) bestanden ist:
s) Auswählen (S603) einer Ausrüstung der Liste, die beim Schritt d) empfangen wurde, durch eine Zufallsziehung, die mit den Lastparametern gewichtet ist.

9. Computerprogramm, das Anweisungen zur Durchführung eines Verfahrens nach Anspruch 1 aufweist, wenn es von einem Prozessor ausgeführt wird.

10. Adressserver, aufweisend eine Speichereinheit, die eine Adresstabelle (40) speichert, wobei die Tabelle Folgendes aufweist:
- Einträge (41) für Kombinationen von Kommunikationseigenschaften in einem IMS-Telekommunikationsnetzwerk, zu dem der Server gehört, wobei die Eigenschaften mit einem Teilnehmer einer Benutzervorrichtung in Verbindung stehen;
- für jeden Eintrag eine Liste mit S-CSCF-Ausrüstungen (42) des Netzwerks, die zu der entsprechenden Kombination von Eigenschaften kompatibel sind;
- für jede Ausrüstung der Liste ein Datenfeld (44) für einen Nutzungslastparameter der Ausrüstung und ein Datenfeld (43) zum Lokalisieren der Ausrüstung in dem Netzwerk
wobei der Server ferner Folgendes aufweist:
einen Eingang (83) zum Empfang einer Anforderung, die Eigenschaften eines Teilnehmers in einer symbolischen Adresse aufweist;
eine Verarbeitungseinheit (81) zum Erstellen einer Liste mit S-CSCF-Ausrüstungen, die mit den Eigenschaften des Teilnehmers kompatibel sind, die in Abhängigkeit von der Tabelle und den empfangenen Eigenschaften empfangen wurden;
einen Ausgang (84) zum Übertragen der Liste mit S-CSCF-Ausrüstungen.

11. Server nach Anspruch 10, ferner aufweisend einen Eingang (83) zum Empfang einer symbolischen Adresse, die durch die Durchführung des Verfahrens nach Anspruch 1 erhalten wurde, und eine Verarbeitungseinheit (81) zum Wählen eines Eintrags der entsprechenden Adresstabelle.

12. I-CSCF-Verwaltungsausrüstung eines IMS-Telekommunikationsnetzwerks zur Auswahl einer S-CSCF-Ausrüstung des Netzwerks bei der Registrierung einer Benutzervorrichtung, um Kommunikationen durchzuführen, aufweisend:
- einen ersten Kommunikationsanschluss (73) zum Empfang eines Satzes von Eigenschaften, die mit einem Teilnehmer der Benutzervorrichtung in Verbindung stehen;;
- eine Verarbeitungseinheit (71) zum Bilden einer ersten symbolischen Adresse zur Abfrage eines Adressservers anhand mindestens eines Teils der Eigenschaften des Satzes einerseits und eines Adressen-Domainnamens andererseits;
- einen zweiten Kommunikationsanschluss (75) zum Übertragen der ersten Adresse an den Adressserver;
- einen dritten Kommunikationsanschluss (74) zum Empfang, anhand des Adressen-Domainnamens bei Abfrage des Adressservers, einer Liste mit einer oder mehreren S-CSCF-Ausrüstungen, die zu dem mindestens einen Teil der Eigenschaften des Satzes kompatibel sind, wobei die Liste für jede kompatible Ausrüstung eine physische Adresse der kompatiblen Ausrüstung aufweist; und
wobei die Verarbeitungseinheit eine S-CSCF-Ausrüstung aus der Liste auswählt.

## Claims

1. Method implemented by an apparatus of I-CSCF type for the selecting of a device of S-CSCF type of a telecommunications network of IMS type during the registration of a user apparatus for implementing communications on the telecommunications network of IMS type, comprising the following steps:
a) receiving (S30) a set of characteristics associated with a subscriber of said user apparatus;
b) forming (S31, S32) a first symbolic address for the interrogation of an address server, on the basis of at least some of the characteristics of said set on the one hand, and of an address domain name on the other hand;
c) transmitting (S33) the first address to the address server;
d) receiving (S34) on the basis of the address domain name on interrogation of said address server a list of one or more devices of S-CSCF type which are compatible with said at least some of the characteristics of said set;
said list comprising for each compatible device a physical address of said compatible device; and
e) selecting (S35) a device of S-CSCF type from among the list.

2. Method according to Claim 1, in which step /e/ is performed during the registration of a user apparatus.

3. Method according to Claim 1, in which the step of forming the first address comprises a concatenating of symbols representing the at least some of the characteristics of said set, with the domain name.

4. Method according to Claim 1, in which the characteristics are represented by one or more symbols, and in which the forming of the first symbolic address comprises the steps of:
- ranking the at least some of the characteristics of the set;
- concatenating the symbols of the characteristics according to the ranking effected; and
- concatenating the string of concatenated symbols with the domain name.

5. Method according to Claim 1, in which the list of devices comprises for each device, a field (44) representative of a parameter of current usage load of said device.

6. Method according to Claim 5, in which the selecting of the device is based on the parameters of current load of the devices of the list.

7. Method according to Claim 5, in which the set of characteristics comprises main characteristics and secondary characteristics, and in which step b) is executed with said main characteristics and said secondary characteristics, the method further comprising the steps of:
f) preselecting (S502) in the device list received during step d), the device whose load is the lowest;
g) load testing (T503) the device preselected during step f) as a function of the associated load parameter; and
h) selecting (S504) the device preselected during step f) if the load testing of step g) is satisfied, or else
i) re-executing steps b) to d), with said main characteristics and without said secondary characteristics;
j) preselecting (S507) in the device list received during step i), the device whose load is the lowest;
k) load testing (T508) the device preselected during step j) as a function of the associated load parameter and comparing (T509) with a threshold a load difference between the device preselected during step f) and the device preselected during step j); and
1) selecting (S510) the device preselected during step j) if the load testing of step k) is satisfied and if the difference is greater than the threshold, or else, the device preselected during step f).

8. Method according to Claim 5, in which the set of characteristics comprises main characteristics and secondary characteristics, and in which step b) is executed with said main characteristics and said secondary characteristics, the method further comprising the steps of:
m) load testing (T602) the devices of the device list received during step d), as a function of the load parameters associated with the devices;
then if the test of step m) is is satisfied for any of the devices of the list:
n) preselecting (S604) in the device list received during step d), the device whose load is the lowest;
o) re-executing steps b) to d), with said main characteristics and without said secondary characteristics;
p) preselecting (S606) in the device list received during step o), the device whose load is the lowest;
q) load testing (T607) the device preselected during step p) as a function of the associated load parameter and comparing (T609) with a threshold a load difference between the device preselected during step n) and the device preselected during step p); and
r) selecting (S610) a device of the list received during step o) by random drawing weighted by the load parameters if the test of step q) is satisfied and if the difference is greater than the threshold, or else, the device preselected during step n); or,
if the test of step m) is satisfied:
s) selecting (S603) a device of the list received during step d) by random drawing weighted by the load parameters.

9. Computer program comprising instructions for the implementation of a method according to Claim 1, when it is executed by a processor.

10. Address server comprising a memory unit storing an address table (40), said table comprising:
- inputs (41) for combinations of characteristics of communication on a telecommunications network of IMS type to which the server belongs, said characteristics being associated with a subscriber of a user apparatus;
- for each input, a list of devices (42) of S-CSCF type of the network which are compatible with the corresponding combination of characteristics;
- for each device of the list, a data field (44) for a usage load parameter of the device, and a data field (43) for locating the device on the network
said server further comprising
an input (83) for receiving a request comprising characteristics of a subscriber in a symbolic address;
a processing unit (81) for establishing a list of devices of S-CSCF type which are compatible with the subscriber's characteristics received as a function of said table and of the characteristics received;
an output (84) for transmitting the list of devices of S-CSCF type.

11. Server according to Claim 10, further comprising an input (83) for receiving a symbolic address obtained by implementing the method according to Claim 1, and a processing unit (81) for choosing an input of the corresponding address table.

12. Device for management of I-CSCF type of a telecommunications network of IMS type for the selecting of a device of S-CSCF type of the network during the registration of a user apparatus for implementing communications, comprising:
- a first communication port (73) for receiving a set of characteristics associated with a subscriber of said user apparatus;
- a processing unit (71) for forming a first symbolic address for the interrogation of an address server, on the basis of at least some of the characteristics of said set on the one hand, and of an address domain name on the other hand;
- a second communication port (75) for transmitting the first address to the address server;
- a third communication port (74) for receiving on the basis of the address domain name on interrogation of said address server a list of one or more devices of S-CSCF type which are compatible with said at least some of the characteristics of said set, said list comprising for each compatible device a physical address of said compatible device; and
in which the processing unit selects a device of S-CSCF type from among the list.
